# EUROPEAN PATENT SPECIFICATION

(11) **EP 3 160 243 B1**
(45) Date of publication and mention of the grant of the patent: **07.03.2018**
(21) Application number: 15732671.1
(22) Date of filing: 29.06.2015
(51) Int. Cl.: A23C 3/00, A23C 7/00, A61L 2/00, B65B 55/02, B67B 7/00

(54) **A METHOD FOR EFFICIENTLY FILLING A SYSTEM WITH LIQUID PRODUCT**
VERFAHREN ZUR EFFIZIENTEN BEFÜLLUNG EINES SYSTEMS MIT EINEM FLÜSSIGPRODUKT
PROCÉDÉ DE REMPLISSAGE EFFICACE D'UN SYSTÈME AVEC UN PRODUIT LIQUIDE

(30) Priority: 30.06.2014 SE 1450806
(43) Date of publication of application: 03.05.2017
(73) Proprietor: Tetra Laval Holdings & Finance SA, 1009 Pully (CH)
(72) Inventor: ANDERSSON, Göran, 243 72 Tjörnarp (SE); OLSSON, Bo, 215 80 Malmö (SE)
(74) Representative: Tetra Pak - Patent Attorneys SE
(86) International application number: PCT/EP2015/064709
(87) International publication number: WO 2016/001146

(56) References cited:
- EP-A1- 2 540 627
- JP-A- 2004 210 402
- US-A- 4 502 614
- US-A- 6 136 362

## Description

### Technical Field

The invention generally relates to the field of liquid or semi-liquid food processing systems. More particularly, it is presented a method for efficiently filling a system with liquid product.

### Background of the invention

Today, it is in the interest of liquid food processing companies around the world to make sure that the food they are processing are done so in a way that assure that the food are safe to consume. This shows for instance in that each batch is carefully followed by using different kinds of sensors and sophisticated software tools, but also in that the design of the different components in the food processing lines are made in a way such that the risk that food residues are left from one batch to another is reduced to a very low likelihood.

Just as food safety is on top of the agenda for food processing companies, it is one of their top interests to make sure that product losses are kept at a minimum. Since the raw material, such as milk or fruit, in many cases has a significant role in the operational costs, lowering the product losses have in most cases a direct effect on the financial result. Secondly, in order to make sure that the processing is environmental friendly, the effect on e.g. carbon dioxide emissions can be significantly reduced if the losses of final product can be lowered.

One reason for having product losses is because the system is not started up in an efficient way. For example, by filling an empty system in a way such that air is entrapped the product may be affected and also the system, in turn having the effects of increased product losses and possible machine failure. Some related prior art is reflected by patent documents US6136362A, EP2540627A1 and US4502614A.

### Summary

Accordingly, the present invention preferably seeks to mitigate, alleviate or eliminate one or more of the above-identified deficiencies in the art and disadvantages singly or in any combination and solves at least the above mentioned problems.

According to a first aspect it is provide a method for filling an empty system with a liquid product, said system comprising an inlet, a first valve, a tank, a first pipe connecting said inlet to said tank forming a first flow path, wherein said first pipe is provided with said first valve such that said first flow path is closed or open, a second pipe connecting said tank to said inlet forming a second flow path, such that said first flow path and said second flow path provide a circulation flow path, said method comprising closing said first valve such that said first flow path is closed, feeding in said liquid product via said inlet such that said second pipe is filled with said liquid product, opening said first valve such that said first flow path is opened, and feeding in said liquid product via said inlet such that said first pipe is filled with said liquid product.

The method may further comprise feeding in said liquid food product via said inlet such that said second pipe and part of said tank is filled with said liquid product before opening said first valve.

A level switch may be arranged in said tank to determine when said part of said tank is filled with liquid product, and wherein said system is configured to open said first valve when said level switch has determined that said part of said tank is filled.

The second pipe may be provided with a diversion valve arrangement such that at least part of said second flow path is diverted or that said second flow path is not diverted, said method further comprising, after feeding in said liquid product via said inlet such that said first pipe is filled with said liquid product, feeding in said liquid product via said first pipe, and diverting at least part of said second flow path using said diversion valve arrangement.

The at least part of said second flow path may be diverted to a filling machine.

The liquid product may be a liquid food product.

The second pipe may be provided with a pump, and said pump may be filled when said second pipe is filled with liquid product.

The second pipe may be longer than said first pipe.

The first pipe or said second pipe may be provided with a cooling device.

According to a second aspect it is provided a system for handling a liquid product, said system comprising an inlet, a first valve, a tank, a first pipe connecting said inlet to said tank forming a first flow path, wherein said first pipe is provided with said first valve such that said first flow path is closed or open, a second pipe connecting said tank to said inlet forming a second flow path, such that said first flow path and said second flow path provide a circulation flow path, wherein said system is configured to perform the steps of_closing said first valve such that said first flow path is closed,_feeding in said liquid product via said inlet such that said second pipe is filled with said liquid product, opening said first valve such that said first flow path is opened, and feeding in said liquid product via said inlet such that said first pipe is filled with said liquid product.

The system may further be configured to perform the step of feeding in said liquid food product via said inlet such that said second pipe and part of said tank is filled with said liquid product before opening said first valve.

A level switch in said tank may be arranged to determine when said part of said tank is filled with liquid product, and wherein said system is configured to open said first valve when said level switch has determined that said part of said tank is filled.

The second pipe may be provided with a diversion valve arrangement such that at least part of said second flow path is diverted or that said second flow path is not diverted, said system is, after feeding in said liquid product via said inlet such that said first pipe is filled with said liquid product, further configured to perform the steps of
feeding in said liquid product via said first pipe, and
diverting at least part of said second flow path using said diversion valve arrangement.

The at least part of said second flow path may be diverted to a filling machine.

The liquid product may be a liquid food product.

The second pipe may be provided with a pump, and said pump may be filled when said second pipe is filled with liquid product.

The expresson "liquid food product" should be understood to include all food products that can be pumped. In other words, the expression should also be understood to e.g. semi-liquid food products.

### Brief description of the drawings

The above, as well as additional objects, features and advantages of the present invention, will be better understood through the following illustrative and non-limiting detailed description of preferred embodiments of the present invention, with reference to the appended drawings, wherein:
Fig 1 generally illustrates an example of a downstream part of a food processing system including inter alia a tank and a filling machine.
Fig 2 generally illustrates an example of a downstream part of a food processing system including inter alia a tank and a filling machine, wherein said downstream part is provided with a circular connection.
Fig 3 is a general flow diagram illustrating another example of a downstream part of a food processing system including inter alia a tank and a filling machine, wherein said downstream part is provided with a circular connection.

### Detailed description of preferred embodiments

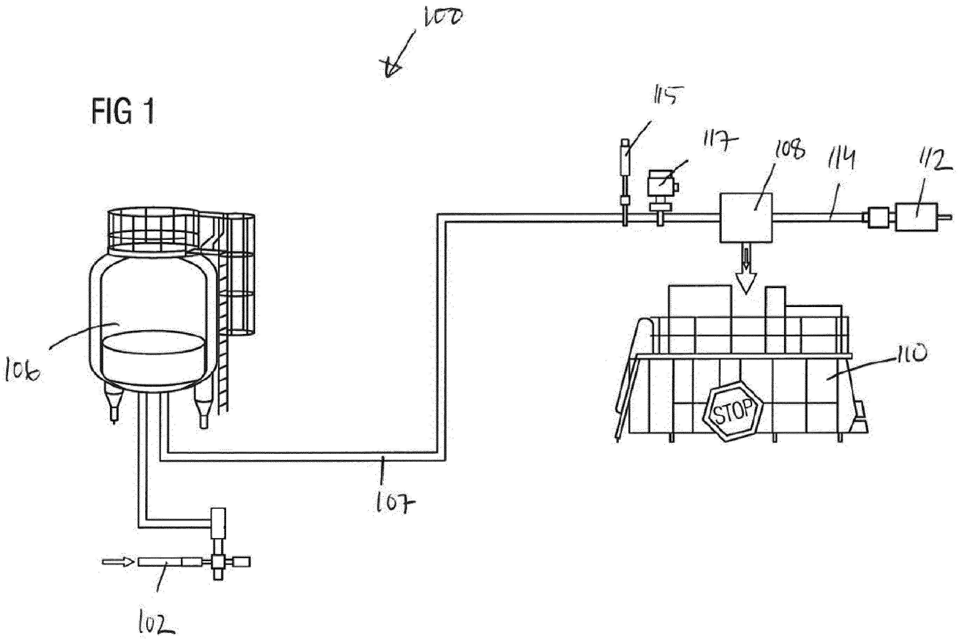

Fig 1 generally illustrates an example of a system 100 being part of a bigger system for processing and packing liquid or semi-liquid food products, such as so-called Extended Shelf Life (ESL) milk packed in carton packages. More particularly, the system 100 illustrates an inlet 102 for receiving heat treated product and feeding it to a tank 106, preferably a closed tank with a cooling system, arranged to hold the product without the risk of having it recontaminated. From the tank 106 the product is fed via a pipe 107 to a filling valve 108. The filling valve 108 can either direct the product to a filling machine 110 or to a reclaim tank via a reclaim valve 112 and a reclaim pipe 114, connecting the filling valve 108 and the reclaim valve 112.

During preparation of the system 100 product is fed via the inlet 102 to the tank 106 to form a buffer of product in the tank to balance out minor variations in the product flow upstream and downstream the tank 106. When having the buffer formed in the tank, the pipe 107 connecting the tank and the filling valve 108 is filled with product, and also the reclaim pipe 114.

After having filled the system 100 with product and it is made sure that temperature and pressure are within target intervals, for example by using a temperature sensor 115 and a pressure sensor 117, product is fed to the filling machine 110 where it is filled in packages.

During production, or in other words after having filled the system 100 and the product is fed to the filling machine 110, when handling ESL milk, the product should be kept at a temperature of about 4 degrees C to make sure that microbiological growth is prevented. If no product is fed to the reclaim tank for some time there is a risk that the product in the reclaim pipe 114 is heated, for instance by the surrounding environment, to a temperature above 4 degrees C. If this temperature increase is not prevented and kept under control, this may lead to microbacterial growth in the product kept in the reclaim pipe 114.

Further, if there is an unplanned stop of the filling machine, product will be standing in the pipe 107 connecting the tank 106 to the filling valve 108. If the stop lasts for a long period of time there is a risk of microbiological growth and, as an effect, that the product in the pipe 107 needs to be wasted and that the system needs to be cleaned before starting up again after the unplanned stop caused by the filling machine.

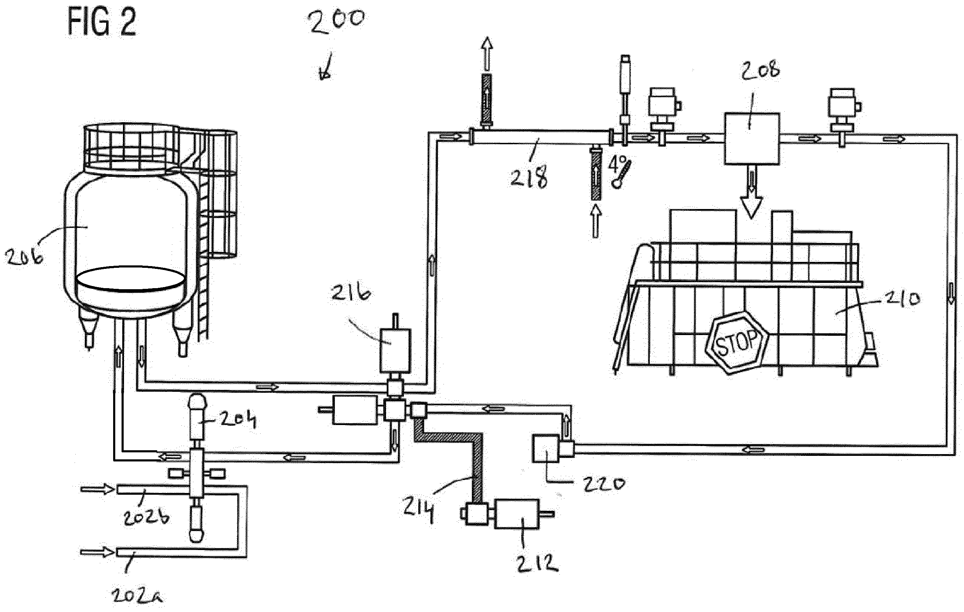

In order to overcome the problem of having product standing in the pipe 107 that may become bad in case of a long hault due to an unplanned stop caused by the filling machine 110, a system 200, illustrated in fig 2, can be used. Unlike the system 100 illustrated in fig 1, the system 200 provides for that the product can be circulated such that there will be no standing product in case of a filling machine stop.

The system 200 can comprise an inlet in turn comprising a first inlet 202a and a second inlet 202b, a valve 204 connected to to the inlet, a tank 206 forming a buffer to balance out variations in the product flow upstream and downstream, a filling valve 208 feeding part of a product flow to a filling machine 210 or in case the filling machine stops providing for that the product flow is fed pass the filling machine, a reclaim valve 212, a reclaim pipe 214 connecting the reclaim valve 212 to a valve arrangement 216, and an inline cooler 218 providing for that the product being circulated is kept within set temperature intervals.

During preparation sterile water is fed via the inlet. After having filled the system with sterile water and circulated the sterile water it can be fed out of the system to the drain via the reclaim valve 212.

If ESL milk or any other product that should be kept chilled is to be processed, the sterile water may be cold in order to make sure that the system is not only flushed, but also cooled before production starts.

After having had the system 200 flushed with sterile water, sterile air can be introduced into the system 200. Sterile air may be introduced via the tank 206 such that the sterile water present in the system is removed. This may for instance be done by introducing sterile air into the tank 206 and from there via the valve 204 to the valve arrangement 216 at the same time as sterile air is fed from the tank 206 via the valve arrangement 216, the inline cooler 218, the filling valve 208, the pump 220, back to the the valve arrangement 216, via the reclaim valve 212 to the reclaim tank.

After having flushed the system 200 with sterile water and sterile air, the system can be filled with product. This can be done by filling via the inlets 202a, 202b and feeding it via the valve 204, the tank 206, the valve arrangement 216, the inline cooler 218, the filling valve 208, the pump 220, the valve arrangement 216, the reclaim pipe 214, the reclaim valve 212 to the drain.

During production, product is fed via the inlets 202a, 202b via the valve 204, the tank 206, the valve arrangement 216, the inline cooler 218, the filling valve 208 to the filling machine 210. In order to make sure that no product is standing in the pipe connecting the filling valve 208 and the valve 204 part of the product may be diverted to the filling machine 210 and part of it circulated by feeding it back to the valve 204.

In case of an unplanned stop of the filling machine 210, or planned stop, the filling valve 208 can be changed such that all product are circulated and the incoming product result in that more product is buffered in the tank.

In order to make sure that the product is kept chilled, or in any other way within a target temperature interval, in case of a stop of the filing machine 210, the inline cooler 218 can be used. In the illustrated example, the inline cooler 218 is a tubular heat exchanger being provided with 4 degrees C water to make sure that a temperture of the product when passing the inline cooler is lowered to the target temperature interval. By doing so, the risk of having the product recontaminated during a stop of the filling machine 210 is reduced, which is positive from both a food safety perspective as well as a product loss perspective.

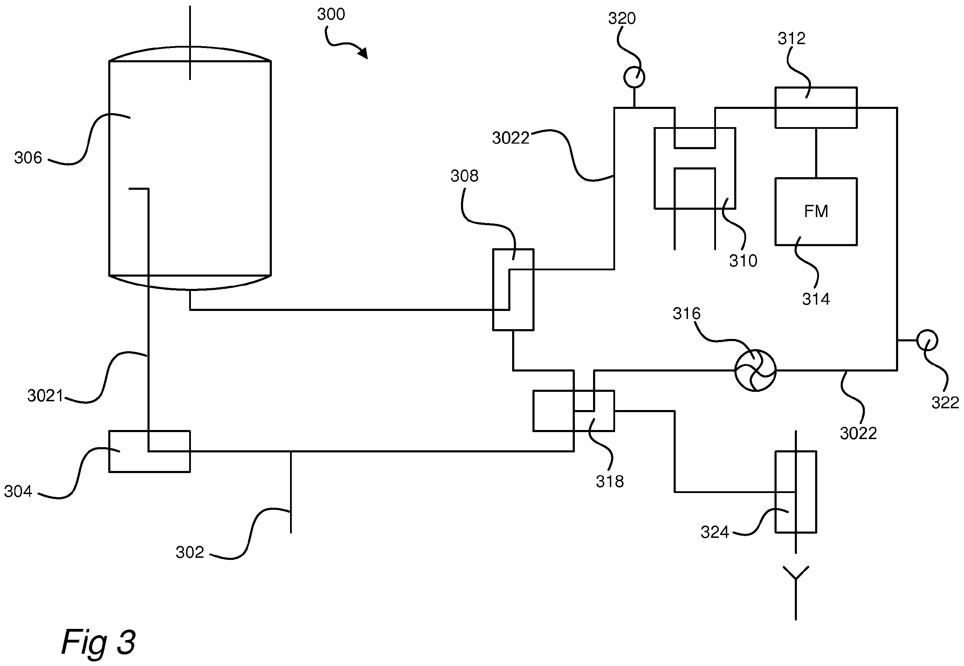

Fig 3 illustrates a flow diagram of a system 300 of a food processing system similar to the the system illustrated in fig 1 and 2.

In the system 300 liquid product can be fed via an inlet 302 via a first valve 304 to a tank 306. From the tank the liquid product can be fed via a second valve 308 and an inline cooler 310 to a diversion valve 312. The diversion valve 312 may be set to either divert part of a product flow to a filling machine 314 or not divert the flow to the filling machine such that the product flow is fed pass the filling machine 314. During production, the diversion valve can be set to divert part of the product flow. The reason why only part of the product flow is fed to the filling machine 314 is to make sure that there are no dead ends with standing product.

The product not diverted to the filling machine can be fed to a third valve 318 via a pump 316. From the third valve 318 the product may be fed to the inlet 302 such that the circular connection is achieved, providing for that the product can be circulated in the system. By having the inline cooler 310 in the system the product, when being recirculated, can be kept cool providing for that the risk for microbacterial growth can be kept low.

In order to keep track of the level in the system level sensors can be used. In the example illustrated in fig 3 a first level sensor 320 can be provided upstream the diversion valve 312 and a second level sensor 322 can be provided downstream the diversion valve 312.

The third valve 318 can be configured to either direct the product flow to the inlet as described above, or to direct the flow to a drain or reclaim system via a fifth valve 324. During cleaning, water and cleaning solutions can be sent to the drain or reclaim system.

After cleaning the fifth valve 324 may be set such that sterile air can be fed into the system via the fifth valve 324. In order to avoid that product is entering the part of the system between the fifth valve 324 and the third valve 318, herein referred to as a reclaim pipe, this part may be filled with overpressurized sterile air.

Sterile air may be used for emptying the tank 306. In case there is a system for providing sterile air to the tank this system may also be used for providing sterile air to the reclaim pipe.

An advantage of using overpressurized sterile air, that is having sterile air at a pressure in the reclaim pipe higher than a pressure in a closely placed pipe containing product during production, is that there is no need to use steam to ensure food safety. Unlike sterile air, steam will namely have the negative effect that product can burn on a part of the third valve being close to the reclaim pipe. Therefore, by having overpressurized sterile air instead of steam less fouling may occur, in turn resulting in improved running times.

When filling an empty system there may be air entrapped in the system. In order to make sure that this air is pushed out of the system and for instance not into the filling machine, the system can be filled with product by closing the first valve 304 and feeding in product via the inlet in a direction opposite to the direction of the product flow during production, namely via the third valve 318, the pump 316, the diversion valve 312, the second valve 308 to the tank 306. By using for instance a level switch in the tank 306, the system can be informed, by using a controller or other data handling apparatus, when the tank is filled to a certain level.

When the tank is filled to the certain level the first valve 304 can be opened such that product is fed from the inlet 302 via the first valve 304 to the tank 306.

In the illustrated example a first flow path from the inlet to the tank via the first valve is shorter than a second flow path from the inlet via the third valve, the pump, the diversion valve, the inline cooler, the second valve to the tank. Therefore, in the illustrated example, due to the first flow path is shorter than the second flow path, and that the second flow path is filled with product and the first flow path is empty, with the exception of the part between the inlet and the first valve, the product flow will choose the first flow path when opening the first valve. However, if needed to direct the product fed in via the inlet to the first flow path, a valve may be provided on the second flow path close to the inlet such that the second flow path can be closed.

After having filled the first flow path with product, product can be continued to be fed into the system via the inlet and the product flow from the tank can now switch to going from the tank via the second valve 308, the inline cooler 310 to the diversion valve 312, where part of the product flow can be fed to the filling machine 314 and part be fed via the pump 316, the third valve 318 and the first valve 304 to the tank 306.

In order to make sure that product losses can be kept low the system may be emptied by pushing out product present in the system by sterile air fed into the system via the tank 306.

In a first step of an emptying process, product placed in the system beween the tank, the second valve, the inline cooler and the diversion valve 312 can be pushed out to the filling machine by using sterile air fed into the system via the tank. In order to make sure that product is fed in this direction, the first valve 304 may be closed in this first step. Another option is, if having a tank inlet placed above a tank outlet, is to have the first valve closed when the tank level is above the tank inlet.

In a second step product placed in the system between the third valve 318, the pump 316 and the diversion valve 312 can be pushed out to the filling machine 314 by setting the second valve 308 such that sterile air fed from the tank is directed to the third valve 318. By emptying part of the system backwards in this way the product placed between the third valve and the diversion valve can be packed and used, instead of being sent to the drain. Since the distance between the diversion valve and the third valve may at some sites be long substantial savings can be made.

By having the first level sensor 320, an amount of product upstream the diversion valve 312 can be measured. When the amount of product is below a threshold the system can change such that product placed between the third valve 318 and the diversion valve 312 is pushed towards the diversion valve 312 by changing the second valve 308, as explained above.

Similarly, by having the second level sensor 322, an amount of product downstream the diversion valve can be measured in order to know when to stop feeding in sterile air in order to push product towards the diversion valve.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for filling an empty system with a liquid product,
said system comprising an inlet (302), a first valve (304), a tank (306), a first pipe (3021) connecting said inlet (302) to said tank (306) forming a first flow path, wherein said first pipe (3021) is provided with said first valve (304) such that said first flow path is closed or open, a second pipe (3022) connecting said tank (306) to said inlet (302) forming a second flow path, such that said first flow path and said second flow path provide a circulation flow path, said method comprising
closing said first valve (304) such that said first flow path is closed,
feeding in said liquid product via said inlet (302) such that said second pipe (3022) is filled with said liquid product,
opening said first valve (304) such that said first flow path is opened, and
feeding in said liquid product via said inlet (302) such that said first pipe (3021) is filled with said liquid product.

2. The method according to claim 1, further comprising feeding in said liquid food product via said inlet (302) such that said second pipe (3022) and part of said tank (306) is filled with said liquid product before opening said first valve (304).

3. The method according to claim 2, wherein a level switch in said tank (306) is arranged to determine when said part of said tank (306) is filled with liquid product, and wherein said system is configured to open said first valve (304) when said level switch has determined that said part of said tank (306) is filled.

4. The method according to any of the preceding claims, wherein said second pipe (3022) is provided with a diversion valve arrangement (312) such that at least part of said second flow path (3022) is diverted or that said second flow path is not diverted, said method further comprising, after feeding in said liquid product via said inlet (302) such that said first pipe (3021) is filled with said liquid product,
feeding in said liquid product via said first pipe (3021), and
diverting at least part of said second flow path using said diversion valve arrangement (312).

5. The method according to claim 4, wherein said at least part of said second flow path is diverted to a filling machine (314).

6. The method according to any of the preceding claims, wherein said liquid product is a liquid food product.

7. The method according to any of the preceding claims, wherein said second pipe (3022) is provided with a pump (316), and said pump (316) is filled when said second pipe (3022) is filled with liquid product.

8. The method according to any of the preceding claims, wherein said second pipe (3022) is longer than said first pipe (3021).

9. The method according to any of the preceding claims, wherein said first pipe (3021) or said second pipe (3022) is provided with a cooling device (218).

10. A system for handling a liquid product, said system comprising an inlet (302), a first valve (304), a tank (306), a first pipe (3021) connecting said inlet (302) to said tank (306) forming a first flow path, wherein said first pipe (3021) is provided with said first valve (304) such that said first flow path is closed or open, a second pipe (3021) connecting said tank (306) to said inlet (302) forming a second flow path, such that said first flow path and said second flow path provide a circulation flow path, wherein said system is configured to perform the steps of
closing said first valve (304) such that said first flow path is closed,
feeding in said liquid product via said inlet (302) such that said second pipe (3022) is filled with said liquid product,
opening said first valve (304) such that said first flow path is opened, and
feeding in said liquid product via said inlet (302) such that said first pipe (3021) is filled with said liquid product.

11. The system according to claim 10, wherein said system is further configured to perform the step of feeding in said liquid food product via said inlet (302) such that said second pipe (3022) and part of said tank (306) is filled with said liquid product before opening said first valve (304).

12. The system according to claim 11, wherein a level switch in said tank (306) is arranged to determine when said part of said tank (306) is filled with liquid product, and wherein said system is configured to open said first valve (304) when said level switch has determined that said part of said tank (306) is filled.

13. The system according to any one of the preceding claims 10 to 12, wherein said second pipe (3022) is provided with a diversion valve arrangement (312) such that at least part of said second flow path is diverted or that said second flow path is not diverted, said system is, after feeding in said liquid product via said inlet (302) such that said first pipe (3021) is filled with said liquid product, further configured to perform the steps of
feeding in said liquid product via said first pipe (3021), and
diverting at least part of said second flow path using said diversion valve arrangement (312).

14. The system according to claim 13, wherein said at least part of said second flow path is diverted to a filling machine (314).

15. The system according to any of the claims 10 to 14, wherein said liquid product is a liquid food product.

16. The system according to any of the claims 10 to 15, wherein said second pipe (3022) is provided with a pump (316), and said pump (316) is filled when said second pipe (3022) is filled with liquid product.

## Patentansprüche

1. Verfahren zur Befüllung eines leeren Systems mit einem Flüssigprodukt, wobei das System einen Einlass (302), ein erstes Ventil (304), einen Tank (306), ein erstes Rohr (3021), das den Einlass (302) mit dem Tank (306) verbindet, um einen ersten Strömungsweg zu bilden, wobei das erste Rohr (3021) mit dem ersten Ventil (304) ausgestattet ist, so dass der erste Strömungsweg geschlossen oder geöffnet werden kann, sowie ein zweites Rohr (3022) umfasst, das den Tank (306) mit dem Einlass (302) verbindet, um einen zweiten Strömungsweg zu bilden, so dass der erste Strömungsweg und der zweite Strömungsweg einen Kreislaufströmungsweg bereitstellen, wobei das Verfahren Folgendes umfasst:
Schließen des ersten Ventils (304), so dass der erste Strömungsweg geschlossen wird;
Einleiten des Flüssigprodukts über den Einlass (302), so dass das zweite Rohr (3022) mit dem Flüssigprodukt befüllt wird;
Öffnen des ersten Ventils (304), so dass der erste Strömungsweg geöffnet wird; und
Einleiten des Flüssigprodukts über den Einlass (302), so dass das erste Rohr (3021) mit dem Flüssigprodukt befüllt wird.

2. Verfahren nach Anspruch 1, das weiterhin das Einleiten des Flüssigprodukts über den Einlass (302) umfasst, so dass das zweite Rohr (3022) und ein Teil des Tanks (306) vor dem Öffnen des ersten Ventils (304) mit dem Flüssigprodukt befüllt werden.

3. Verfahren nach Anspruch 2, wobei ein Niveauschalter im Tank (306) angeordnet ist, um zu bestimmen, wann der Teil des Tanks (306) mit Flüssigprodukt befüllt ist, und wobei das System konfiguriert ist, um das erste Ventil (304) zu öffnen, wenn der Niveauschalter bestimmt, dass der Teil des Tanks (306) befüllt ist.

4. Verfahren nach einem der vorstehend aufgeführten Ansprüche, wobei das zweite Rohr (3022) mit einer Rohrweichenanordnung (312) ausgestattet ist, so dass mindestens ein Teil des zweiten Strömungswegs (3022) umgeleitet oder der zweite Strömungsweg nicht umgeleitet wird, wobei das Verfahren, nachdem das Flüssigprodukt über den Einlass (302) eingeleitet wurde, so dass das erste Rohr (3021) mit dem Flüssigprodukt befüllt ist, weiterhin Folgendes umfasst:
Einleiten des Flüssigprodukts über das erste Rohr (3021); und
Umleiten von mindestens einem Teil des zweiten Strömungswegs unter Nutzung der Rohrweichenanordnung (312) .

5. Verfahren nach Anspruch 4, wobei mindestens der Teil des zweiten Strömungsweges zu einer Befüllungsmaschine (314) umgeleitet wird.

6. Verfahren nach einem der vorstehend aufgeführten Ansprüche, wobei das Flüssigprodukt ein flüssiges Lebensmittelprodukt ist.

7. Verfahren nach einem der vorstehend aufgeführten Ansprüche, wobei das zweite Rohr (3022) mit einer Pumpe (316) ausgestattet ist, und wobei die Pumpe (316) befüllt wird, wenn das zweite Rohr (3022) mit Flüssigprodukt befüllt ist.

8. Verfahren nach einem der vorstehend aufgeführten Ansprüche, wobei das zweite Rohr (3022) länger als das erste Rohr (3021) ist.

9. Verfahren nach einem der vorstehend aufgeführten Ansprüche, wobei das erste Rohr (3021) oder das zweite Rohr (3022) mit einer Kühlvorrichtung (218) ausgestattet ist.

10. System für den Umgang mit einem Flüssigprodukt, wobei das System einen Einlass (302), ein erstes Ventil (304), einen Tank (306), ein erstes Rohr (3021), das den Einlass (302) mit dem Tank (306) verbindet, um einen ersten Strömungsweg zu bilden, wobei das erste Rohr (3021) mit dem ersten Ventil (304) ausgestattet ist, so dass der erste Strömungsweg geschlossen oder geöffnet werden kann, sowie ein zweites Rohr (3021) umfasst, das den Tank (306) mit dem Einlass (302) verbindet, um einen zweiten Strömungsweg zu bilden, so dass der erste Strömungsweg und der zweite Strömungsweg einen Kreislaufströmungsweg bilden, wobei das System konfiguriert ist, um die folgenden Schritte durchzuführen:
Schließen des ersten Ventils (304), so dass der erste Strömungsweg geschlossen wird;
Einleiten des Flüssigprodukts über den Einlass (302), so dass das zweite Rohr (3022) mit dem Flüssigprodukt befüllt wird;
Öffnen des ersten Ventils (304), so dass der erste Strömungsweg geöffnet wird; und
Einleiten des Flüssigprodukts über den Einlass (302), so dass das erste Rohr (3021) mit dem Flüssigprodukt befüllt wird.

11. Verfahren nach Anspruch 10, wobei das System weiterhin konfiguriert ist, um den Schritt des Einleitens des Flüssigprodukts über den Einlass (302) durchzuführen, so dass das zweite Rohr (3022) und ein Teil des Tanks (306) vor dem Öffnen des ersten Ventils (304) mit dem Flüssigprodukt befüllt werden.

12. System nach Anspruch 11, wobei ein Niveauschalter im Tank (306) angeordnet ist, um zu bestimmen, wann der Teil des Tanks (306) mit Flüssigprodukt befüllt ist, und wobei das System konfiguriert ist, um das erste Ventil (304) zu öffnen, wenn der Niveauschalter bestimmt, dass der Teil des Tanks (306) befüllt ist.

13. System nach einem der vorstehend aufgeführten Ansprüche 10 bis 12, wobei das zweite Rohr (3022) mit einer Rohrweichenanordnung (312) ausgestattet ist, so dass mindestens ein Teil des zweiten Strömungswegs umgeleitet oder der zweite Strömungsweg nicht umgeleitet wird, wobei das System, nachdem das Flüssigprodukt über den Einlass (302) eingeleitet wurde, so dass das erste Rohr (3021) mit dem Flüssigprodukt befüllt ist, weiterhin konfiguriert ist, um die folgenden Schritte durchzuführen:
Einleiten des Flüssigprodukts über das erste Rohr (3021); und
Umleiten von mindestens einem Teil des zweiten Strömungswegs unter Nutzung der Rohrweichenanordnung (312) .

14. System nach Anspruch 13, wobei mindestens der Teil des zweiten Strömungswegs zu einer Befüllungsmaschine (314) umgeleitet wird.

15. System nach einem der Ansprüche 10 bis 14, wobei das Flüssigprodukt ein flüssiges Lebensmittelprodukt ist.

16. System nach einem der Ansprüche 10 bis 15, wobei das zweite Rohr (3022) mit einer Pumpe (316) ausgestattet ist, und wobei die Pumpe (316) befüllt wird, wenn das zweite Rohr (3022) mit Flüssigprodukt befüllt ist.

## Revendications

1. Procédé de remplissage d'un système vide avec un produit liquide,
ledit système comprenant une entrée (302), une première vanne (304), un réservoir (306), un premier tuyau (3021) qui raccorde ladite entrée (302) audit réservoir (306) constituant un premier circuit, dans lequel ledit premier tuyau (3021) est équipé de ladite première vanne (304) de telle sorte que ledit premier circuit est fermé ou ouvert, un second tuyau (3022) raccordant ledit réservoir (306) à ladite entrée (302) constituant un second circuit, de telle sorte que ledit premier circuit et ledit second circuit assurent un circuit de circulation, ledit procédé comprenant les opérations consistant à :
fermer ladite première vanne (304) de telle sorte que ledit premier circuit soit fermé,
introduire ledit produit liquide par ladite entrée (302) de telle sorte que ledit second tuyau (3022) soit rempli dudit produit liquide,
ouvrir ladite première vanne (304) de telle sorte que ledit premier circuit soit ouvert, et
introduire ledit produit liquide par ladite entrée (302) de telle sorte que ledit premier tuyau (3021) soit rempli dudit produit liquide.

2. Procédé selon la revendication 1, comprenant en outre l'opération consistant à introduire ledit produit alimentaire liquide par ladite entrée (302) de telle sorte que ledit second tuyau (3022) et une partie dudit réservoir (306) soient remplis dudit produit liquide avant d'ouvrir ladite première vanne (304).

3. Procédé selon la revendication 2, dans lequel un contacteur de niveau dans ledit réservoir (306) est agencé pour déterminer quand ladite partie dudit réservoir (306) est remplie de produit liquide, et dans lequel ledit système est configuré pour ouvrir ladite première vanne (304) quand ledit contacteur de niveau a déterminé que ladite partie dudit réservoir (306) est remplie.

4. Procédé selon l'une quelconque des revendications précédentes, dans lequel ledit second tuyau (3022) est équipé d'un agencement de vanne de dérivation (312) de telle sorte qu'au moins une partie dudit second circuit (3022) est détournée ou que ledit second circuit n'est pas détourné, ledit procédé comprenant en outre, après avoir introduit ledit produit liquide par ladite entrée (302) de telle sorte que ledit premier tuyau (3021) soit rempli dudit produit liquide, les opérations consistant à :
introduire ledit produit liquide par ledit premier tuyau (3021), et
détourner au moins une partie dudit second circuit au moyen dudit agencement de vanne de dérivation (312).

5. Procédé selon la revendication 4, dans lequel ladite au moins une partie dudit second circuit est détournée vers une machine à remplir (314).

6. Procédé selon l'une quelconque des revendications précédentes, dans lequel ledit produit liquide est un produit liquide alimentaire.

7. Procédé selon l'une quelconque des revendications précédentes, dans lequel ledit second tuyau (3022) est équipé d'une pompe (316), et ladite pompe (316) est remplie quand ledit second tuyau (3022) est rempli de produit liquide.

8. Procédé selon l'une quelconque des revendications précédentes, dans lequel ledit second tuyau (3022) est plus long que ledit premier tuyau (3021).

9. Procédé selon l'une quelconque des revendications précédentes, dans lequel ledit premier tuyau (3021) ou ledit second tuyau (3022) est équipé d'un dispositif de refroidissement (218).

10. Système de manutention d'un produit liquide, ledit système comprenant une entrée (302), une première vanne (304), un réservoir (306), un premier tuyau (3021) qui raccorde ladite entrée (302) audit réservoir (306) constituant un premier circuit, dans lequel ledit premier tuyau (3021) est équipé de ladite première vanne (304) de telle sorte que ledit premier circuit est fermé ou ouvert, un second tuyau (3021) raccordant ledit réservoir (306) à ladite entrée (302) constituant un second circuit, de telle sorte que ledit premier circuit et ledit second circuit assurent un circuit de circulation, dans lequel ledit système est configuré pour effectuer les étapes consistant à :
fermer ladite première vanne (304) de telle sorte que ledit premier circuit soit fermé,
introduire ledit produit liquide par ladite entrée (302) de telle sorte que ledit second tuyau (3022) soit rempli dudit produit liquide,
ouvrir ladite première vanne (304) de telle sorte que ledit premier circuit soit ouvert, et
introduire ledit produit liquide par ladite entrée (302) de telle sorte que ledit premier tuyau (3021) soit rempli dudit produit liquide.

11. Système selon la revendication 10, dans lequel ledit système est en outre configuré pour effectuer l'étape consistant à introduire ledit produit alimentaire liquide par ladite entrée (302) de telle sorte que ledit second tuyau (3022) et une partie dudit réservoir (306) soient remplis dudit produit liquide avant d'ouvrir ladite première vanne (304).

12. Système selon la revendication 11, dans lequel un contacteur de niveau dans ledit réservoir (306) est agencé pour déterminer quand ladite partie dudit réservoir (306) est remplie de produit liquide, et dans lequel ledit système est configuré pour ouvrir ladite première vanne (304) quand ledit contacteur de niveau a déterminé que ladite partie dudit réservoir (306) est remplie.

13. Système selon l'une quelconque des revendications 10 à 12, dans lequel ledit second tuyau (3022) est équipé d'un agencement de vanne de dérivation (312) de telle sorte qu'au moins une partie dudit second circuit est détournée ou que ledit second circuit n'est pas détourné, dans lequel ledit système, après avoir introduit ledit produit liquide par ladite entrée (302) de telle sorte que ledit premier tuyau (3021) soit rempli dudit produit liquide, est en outre configuré pour exécuter les opérations consistant à :
introduire ledit produit liquide par ledit premier tuyau (3021), et
détourner au moins une partie dudit second circuit au moyen dudit agencement de vanne de dérivation (312).

14. Système selon la revendication 13, dans lequel ladite au moins une partie dudit second circuit est détournée vers une machine à remplir (314).

15. Système selon l'une quelconque des revendications 10 à 14, dans lequel ledit produit liquide est un produit liquide alimentaire.

16. Système selon l'une quelconque des revendications 10 à 15, dans lequel ledit second tuyau (3022) est équipé d'une pompe (316), et ladite pompe (316) est remplie quand ledit second tuyau (3022) est rempli de produit liquide.
